# EUROPEAN PATENT APPLICATION

(11) **EP 2 249 230 A1**
(43) Date of publication of application: **10.11.2010**
(21) Application number: 09006078.1
(22) Date of filing: 04.05.2009
(51) Int. Cl.: G06F 3/01

(54) **Non-contact touchpad apparatus and method for operating the same**

(71) Applicant: TOPSEED TECHNOLOGY CORP., Chung Ho City, Taipei Hsien, Taiwan 235 (TW)
(72) Inventor: Chen, Shoei-Lai, Chung Ho City, Taipei Hsien, Taiwan 235 (TW); Hsu, Che-Hao, Chung Ho City, Taipei Hsien, Taiwan 235 (TW)
(74) Representative: TER MEER - STEINMEISTER & PARTNER GbR

(57) **Abstract**

A non-contact touchpad method uses an image sensor (10) to fetch an original image and adjust the original image to obtain an adjusted image. A motion image is detected in the adjusted image. The motion image is corresponded to a database (36) and divided into a plurality of division sections. At least one function block is defined in the database (36) and including at least one of the division sections. The database (36) defines the corresponding computer input action for the function blocks. The division section is determined to be a motion section or not according to a movement threshold. Finally, the computer input action is executed with reference to input functions associated with the motion section and defined in the database (36).

## Description

### BACKGROUND OF THE INVENTION

### Field of the Invention

The present invention relates to a touchpad apparatus and method for operating the same, and more particularly to a non-contact touchpad apparatus and method for operating the same.

### Description of Prior Art

Computer input devices are used between a man and a computer, for example, the keyboards or the computer mice are the most common computer input devices. The user can operate the computer mouse to click buttons, scroll up/down windows, and control a cursor. For the notebook computer, in addition, the touchpad can be taken as the computer mouse. However, it is not convenient for the user to frequently move his/her hand to control the computer mouse or the touchpad, and frequently click the computer mouse (or touch the touchpad) when the computer application programs are operated using to many keys.

In recent years, a touch function is integrated with hand-held apparatuses and large-size monitors to provide a user-friendly man-machine interface. However, the operation area of the touch interface is too large to be convenient. Although the gesture recognition technology is instead of using a physical computer mouse, it is not to avoid frequently moving user's hand when the execution of computer application programs involves many keys.

### SUMMARY OF THE INVENTION

In order to improve the disadvantage mentioned above, the prevent invention provides a method for operating a non-contact touchpad.

In order to improve the disadvantage mentioned above, the prevent invention further provides a non-contact touchpad apparatus.

In order to achieve the objective mentioned above, the non-contact touchpad method uses an image sensor to fetch an original image and adjust the original image to obtain an adjusted image. Afterward, a motion image is detected in the adjusted image. The motion image is corresponded to a database and divided into a plurality of division sections. At least one function block is defined in the database and including at least one of the division sections. The database defines the corresponding computer input action for the function blocks. Afterward, the division section is determined whether to be a motion section according to a movement threshold. Finally, the computer input action is executed with reference to input functions associated with the motion section and defined in the database.

In order to achieve the other objective mentioned above, the non-contact touchpad apparatus is applied to an image sensor. The non-contact touchpad apparatus includes an image sensor driving unit, a motion image recognizing unit, a database, and an input apparatus driving unit. The image sensor driving unit is electrically connected to the image sensor, the motion image recognizing unit is electrically connected to the image sensor driving unit, the database is electrically connected to the motion image recognizing unit, and the input apparatus driving unit is electrically connected to the motion image recognizing unit. Wherein the image sensor fetches an original image and the original image is transmitted to the image sensor driving unit to be transformed into an image electric signal. Afterward, the image electric signal is transmitted to the motion image recognizing unit to be processed as an adjusted image to detect a motion image in the adjusted image. The database is provided to divide the motion image into a plurality of division sections. Also, a function block is defined to include at least one of the division sections, and the database defines corresponding computer input actions for the function blocks. Wherein an input apparatus imitated signal is sent to the input diving unit to execute a corresponding computer input action for a computer application program after comparing the motion image recognizing unit with the database.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a flowchart of operating a non-contact touchpad according to the present invention;
Fig. 2 is a schematic view of utilizing a dynamic image difference;
Fig. 3 is a schematic view of a plurality of division sections;
Fig. 4 is a schematic view of positions of the predicted keys;
Fig. 5 is a flowchart of executing a computer input action; and
Fig. 6 is a block diagram of the non-contact touchpad apparatus.

### DETAILED DESCRIPTION OF THE INVENTION

The non-contact touchpad apparatus and method for operating the same can be accomplished by utilizing only a webcam and a personal computer. A hand gesture movement in free space can imitate a keyboard or a computer mouse to execute the computer application programs, and the computer application programs don't need to be modified. The user's skin color, dress and adornment, and complexity of the environmental background are not limited for operating the non-contact mouse apparatus. Also, users can manually operate the non-contact mouse apparatus without holding any objects with special colors or patterns, hand-held lighting device, or wearing any special data gloves. Furthermore, the database defines different key input modes provided to operate different application programs. Electronic data gloves or special devices are applied to imitate keyboards or computer mice in a large-scale interactive or 3D virtual reality. However, the electronic data gloves are expensive and difficult to fit for hands of various sizes. Besides, the electronic data gloves are heavy to limit operation time and operation action for the operators.

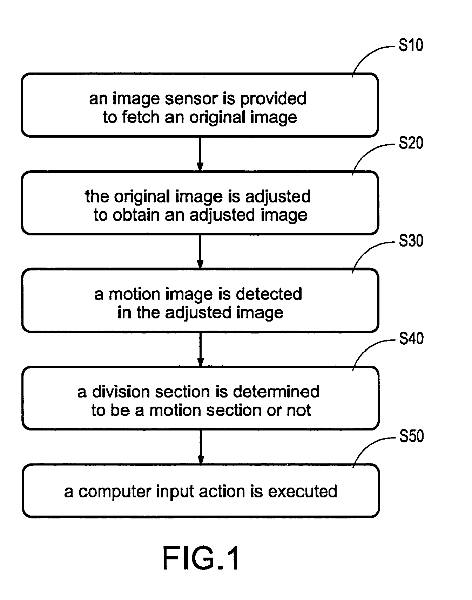

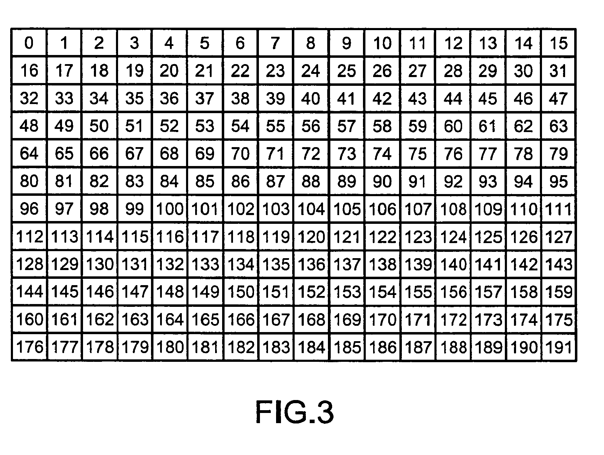

Reference is made to Fig. 1 which is a flowchart of operating a non-contact touchpad according to the present invention. First, an image sensor (such as a webcam) is provided to fetch an original image (S10). Afterward, the original image is adjusted to obtain an adjusted image (S20). Afterward, a motion image (such as a gesture image) is detected in the adjusted image (S30). A database is provided to divide the motion image into a plurality of division sections (as shown in Fig. 3). Also, a function block is defined to include at least one of the division sections, and the database defines corresponding computer input actions for the function blocks. Afterward, the division section is determined to be a motion section or not according to a movement threshold (S40).

In a preferred embodiment, the division section is set as a bright section when the amount of motion pixels of the division section is greater than the movement threshold, namely, the division section is regard as the motion section. On the contrary, the division section is set as a dark section when the amount of motion pixels of the division section is less than the movement threshold, namely, the division section is not regard as the motion section. Hence, a gross motion or a slight motion can be filtered to reduce the possibility of incorrect operations. For example, an image with 160*120 pixels is divided into 192 (16*12=192) division sections; namely, each of the division sections has 100 ((160/16)*(120/12)=100) pixels. It is assumed that the movement threshold is set to 50. The division section is the motion section when the amount of the motion pixels in one division section is greater than the movement threshold. Finally, a computer input action is executed (S50) with reference to input functions associated with the motion section and defined in the database.

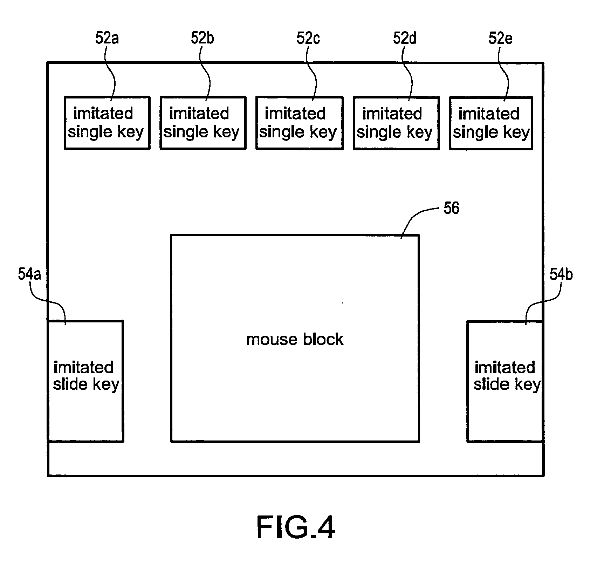

The step of adjusting the original image to obtain an adjusted image includes following sub-steps: (1) to adjust processed size of the original image; (2) to transfer colors of the original image (such as to transfer colors of the original image from 24-bit full-color image to 8-bit gray-level image); and (3) to filter speckle noises of the original image. More particularly, speckle noises of the original image can be filtered by an image low pass filter. The database defines the corresponding computer input actions including imitated single keys, imitated slide keys, imitated toggle keys, and imitated hot keys. The imitated single key is provided to imitate pressing and releasing keys. The imitated slide key is provided to imitate keys downwards moving (positive moving) and upwards moving (negative moving). The imitated toggle key is provided to imitate keeping a key pressed when imitated toggle key is pressed once, and provided to imitate releasing keys when the imitated toggle key is pressed again. The hot key is provided to execute corresponding computer application programs. Also, the contents of the database can be defined by users. The positions of the imitated single keys, imitated slide keys, imitated toggle keys, and imitated slide keys are set according to assigned numbers shown in Fig. 3. In addition, the positions of the keys are shown in Fig. 4, the keys including five imitated single keys (52a, 52b, ..., 52e), two imitated slide keys (54a, 54b), and further a mouse block 56. For example, the imitated single key 52b corresponds to a division section with the assigned numbers of 20, 21, 36, and 37, and the remaining key may be designed in analogous way.

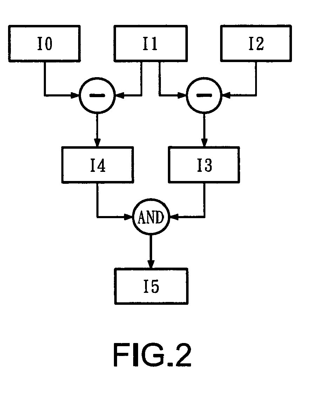

In the step (S30) the motion image in the adjusted image is calculated by using an image difference method. Reference is made to Fig. 2 which is a schematic view of using an image difference method. In order to obtain better performance, three continuous gesture images are processed to calculate the motion image. The three continuous gesture images are a current grey-level image I2, a preceding grey-level image I1 before the current grey-level image I2, and a pre-preceding grey-level image 10 before the preceding grey-level image I1, respectively. A first gray-level threshold value and a second gray-level threshold are set for converting the grey-level image into a binary image. First, the current grey-level image I2 is subtracted by the preceding grey-level image I1 to obtain a first grey-level image (not shown). Afterward, a grey value of each pixel of the first grey-level image is compared to the first gray-level threshold value. A pixel is set as a bright pixel when the grey value of the pixel is greater than or equal to the first gray-level threshold value; on the contrary, a pixel is set as a dark pixel when the grey value of the pixel is less than the first gray-level threshold value. Hence, a first binary image I3 is composed of the bright pixels and the dark pixels. In the same way, the preceding grey-level image I1 is subtracted by the pre-preceding grey-level image 10 to obtain a second grey-level image (not shown). Afterward, a grey value of each pixel of the first grey-level image is compared to the second gray-level threshold value. A pixel is set as a bright pixel when the grey value of the pixel is greater than or equal to the second gray-level threshold value; on the contrary, a pixel is set as a dark pixel when the grey value of the pixel is less than the second gray-level threshold value. Hence, a second binary image I4 is composed of the bright pixels and the dark pixels. Finally, a logic AND operation is performed between the first binary image I3 and the second binary image I4 to produce a third binary image I5, that the third binary image 15 is the motion image for further processing.

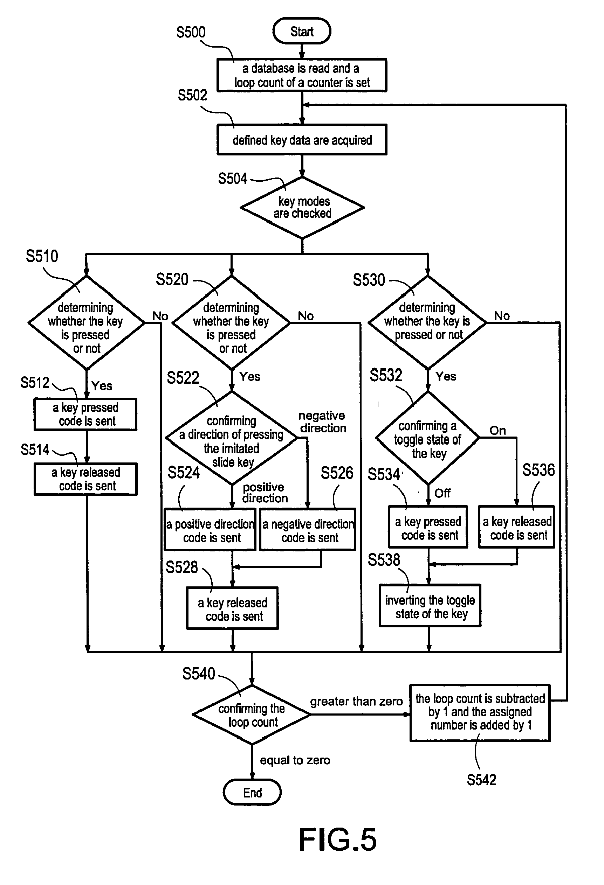

Reference is made to Fig. 5 which is a flowchart of operating a computer input action, that is, the step (S50) is in detailed description. First, the database is read and a loop count of a counter is set (S500). In an exemplary embodiment (as shown in Fig. 4), the loop count is set as seven (because five single keys 52a-52e and two slide keys 54a-54b are provided). Afterward, defined key data are acquired (S502), and key modes are checked (S504). Hence, the input actions of the seven keys (five single keys 52a-52e and two slide keys 54a-54b) is selected and confirmed.

Afterward, step S510 determines whether the key is pressed when the imitated single key is detected in the step (S504). It is to confirm the loop count (S540) when the key is not pressed (the motion section is not detected). Afterward, the loop count is subtracted by 1 and the assigned number is added by 1 (S542) and the procedure is back to the step (S502) when the loop count is greater than zero (the procedure ends when the loop count is zero). A key pressed code is sent (S512) and a key released code is sent (S514) when the key is pressed (the motion section is detected) and released. Afterward, the loop count is subtracted by 1 and the assigned number is added by 1 (S542) and the procedure is back to the step (S502) when the loop count is greater than zero (the procedure ends when the loop count is zero).

Afterward, step S520 determines whether the key is pressed when the imitated slide key is detected in the step (S504). It is to confirm the loop count of a counter (S540) when the key is not pressed (the motion section is not detected). Afterward, the loop count is subtracted by 1 and the assigned number is added by 1 (S542) and the procedure is back to the step (S502) when the loop count is greater than zero (the procedure ends when the loop count is zero). Step S522 confirms a direction of pressing the imitated slide key when the key is pressed (the motion section is detected). A positive direction code is sent (S524) when the direction is positive (upwards moving); or a negative direction code is sent (S526) when the direction is negative (downwards moving). Afterward, a key released code is sent (S528) regardless the execution of the step (S524) or the step (S526). Afterward, the loop count is subtracted by 1 and the assigned number is added by 1 (S542) and the procedure is back to the step (S502) when the loop count is greater than zero (the procedure ends when the loop count is zero).

Afterward, step S530 determines whether the key is pressed when the imitated toggle key is detected in the step (S504). Step S540 confirms the loop count of a counter (S540) when the key is not pressed (the motion section is not detected). Afterward, the loop count is subtracted by 1 and the assigned number is added by 1 (S542) and the procedure is back to the step (S502) when the loop count is greater than zero (the procedure ends when the loop count is zero). Step S532 confirms a toggle state of the key (S532) when the key is pressed (the motion section is detected). A key released code is sent (S536) when the toggle state is On (namely, the imitated toggle key is initially pressed); or a key pressed code is sent (S534) when the toggle state is Off (namely, the imitated toggle key is initially released). Afterward, step S538 inverts the toggle state of the key (S538) regardless the execution of the step (S534) or the step (S536). Afterward, the loop count is subtracted by 1 and the assigned number is added by 1 (S542) and the procedure is back to the step (S502) when the loop count is greater than zero (the procedure ends when the loop count is zero).

For example, when the user's finger moves on a function block of the imitated single key 52a, the division section of the function block is a motion section. Hence, a single-click function is executed starting from the step (S510).

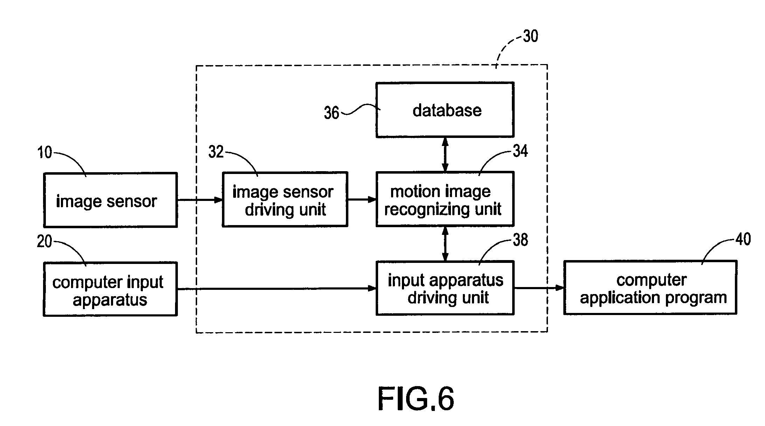

Reference is made to Fig. 6 which is a block diagram of the non-contact touchpad apparatus. The non-contact touchpad apparatus 30 is applied to an image sensor 10 (such as a webcam). The non-contact touchpad apparatus 30 includes an image sensor driving unit 32, a motion image recognizing unit 34, database 36, and an input apparatus driving unit 38. The image sensor 10 is electrically connected to the image sensor driving unit 32. The motion image recognizing unit 34 is electrically connected to the image sensor driving unit 32, the database 36, and the input apparatus driving unit 38. The image sensor 10 fetches an original image (not shown) and the original image is transmitted to the image sensor driving unit 32 to be transformed into an image electric signal (not shown). Afterward, the image electric signal is transmitted to the motion image recognizing unit 34 to be processed as an adjusted image (not shown) to detect a motion image (such as a gesture image, not shown) in the adjusted image. The database 36 is provided to divide the motion image into a plurality of division sections, and a function block is defined to include at least one of the division sections. Also, the database 36 defines corresponding computer input actions for the function blocks. An input apparatus imitating signal (not shown) is sent to the input apparatus driving unit 38 to execute a corresponding computer input action for a computer application program 40 after comparing the motion image recognizing unit 34 with the database 36.

The original image is adjusted to obtain an adjusted image by the motion image recognizing unit 34 with following sub-steps: (1) to adjust processed size of the original image; (2) to transfer colors of the original image (such as to transfer colors of the original image from 24-bit full-color image to 8-bit gray-level image); and (3) to filter speckle noises of the original image. Wherein, speckle noises of the original image can be filtered by an image low pass filter. The database 36 defines the corresponding computer input actions including imitated single keys, imitated slide keys, imitated toggle keys, and imitated hot keys. The imitated single key is provided to imitate pressing and releasing keys. The imitated slide key is provided to imitate keys downwards moving (positive moving) and upwards moving (negative moving). The imitated toggle key is provided to imitate keeping a key pressed when imitated toggle key is pressed once, and provided to imitate releasing keys when the imitated toggle key is pressed again. The hot key is provided to execute corresponding computer application programs. Hence, key actions of a computer input apparatus 20 (such as a keyboard or a computer mouse) can be imitated.

The contents of the database 36 can be defined by users. The positions of the imitated single keys, imitated slide keys, imitated toggle keys, and imitated slide keys are set according to assigned numbers shown in Fig. 3. In addition, the positions of the keys are shown in Fig. 4, which include five imitated single keys (52a, 52b, ..., 52e), two imitated slide keys (54a, 54b), and further a mouse block 56. In addition, the motion image in the adjusted image is calculated by using an image difference method.

The non-contact touchpad apparatus and method for operating the same can be accomplished by utilizing only a webcam and a personal computer to imitate a keyboard or a computer mouse by a gesture in a free space to execute the computer application programs.

## Claims

1. A method for executing a non-contact touchpad apparatus (30), the method comprising the steps of:
(a) fetching an original image by using an image sensor (10);
(b) adjusting the original image to obtain an adjusted image;
(c) detecting a motion image in the adjusted image;
(d) providing a database (36) to divide the motion image into a plurality of division sections, and a function block is defined to include at least one of the division sections, and further defining corresponding computer input actions for the function blocks by the database (36);
(e) determining whether each of the division sections is a motion section according to a movement threshold; and
(f) executing the corresponding computer input action corresponded to the motion sections in the function blocks.

2. The method in claim 1, wherein the step (b) comprising:
(b1) adjusting processed size of the original image;
(b2) transferring colors of the original image; and
(b3) filtering speckle noises of the original image.

3. The method in claim 2, wherein the step (b2) transfers colors of the original image from the 24-bit full-color gesture images to the 8-bit gray-level gesture images.

4. The method in claim 2, wherein the step (b3) filters the speckle noises by an image low pass filter.

5. The method in claim 1, wherein the motion image is a gesture image.

6. The method in claim 1, wherein the step (c) calculates the motion image in the adjusted image by using an image difference method.

7. The method in claim 1, wherein the computer input actions comprises imitated single keys, imitated slide keys, imitated toggle keys, and imitated hot keys.

8. The method in claim 1, wherein the image sensor is a webcam.

9. A non-contact touchpad apparatus (30) applied to an image sensor (10), comprising:
an image sensor driving unit (32) electrically connected to the image sensor (10);
a motion image recognizing unit (34) electrically connected to the image sensor driving unit (32);
a database (36) electrically connected to the motion image recognizing unit (34); and
an input apparatus driving unit (38) electrically connected to the motion image recognizing unit (34);
wherein the image sensor (10) fetches an original image and the original image is transmitted to the image sensor driving unit (32) to be transformed into an image electric signal, and the image electric signal is transmitted to the motion image recognizing unit (34) to be processed as an adjusted image to detect a motion image in the adjusted image;
wherein the database (36) is provided to divide the motion image into a plurality of division sections, and a function block is defined to include at least one of the division sections, and the database (36) defines corresponding computer input actions for the function blocks.
wherein an input apparatus imitated signal is sent to the input apparatus driving unit to (38) execute a corresponding computer input action for a computer application program (40) after comparing the motion image recognizing unit with the database (36).

10. The non-contact touchpad apparatus in claim 9, wherein the motion image is a gesture image.

11. The non-contact touchpad apparatus in claim 9, wherein the corresponding computer input actions comprising imitated single keys, imitated slide keys, imitated toggle keys, and imitated hot keys.

12. The non-contact touchpad apparatus in claim 9, wherein the image sensor is a webcam.
